# EUROPEAN PATENT APPLICATION

(11) **EP 4 628 407 A1**
(43) Date of publication of application: **08.10.2025**
(21) Application number: 24168533.8
(22) Date of filing: 04.04.2024
(51) Int. Cl.: B64D 11/02, B64D 11/04, B64D 47/00, B64D 11/00, B64D 45/00

(54) **SYTEM FOR FLIGHT STATUS BASED CONTROL OF A DEVICE ARRANGED IN A CABIN OF AN AIRCRAFT AND AIRCRAFT COMPRISING SUCH A SYSTEM**

(71) Applicant: Goodrich Lighting Systems GmbH & Co. KG, 59557 Lippstadt (DE)
(72) Inventor: HESSLING-VON HEIMENDAHL, Andre, 56073 Koblenz (DE); JOHNSON, Glenn, 27045 Rural Hall, NC (US)
(74) Representative: Schmitt-Nilson Schraud Waibel Wohlfrom Patentanwälte Partnerschaft mbB

(57) **Abstract**

A system (12) for flight status based control of a device (14), arranged in a cabin (6) of an aircraft (2), comprises: a flight status detector (15), comprising an air pressure sensor (16) for detecting air pressure (p_{cab}) within the cabin (6) and an accelerometer (18) for detecting acceleration of the aircraft (2), and a cabin interior device (14), coupled to the flight status detector (15). The flight status detector (15) is configured to determine a flight status of the aircraft (2) from first sensor data, received from the air pressure sensor (16), and second sensor data, received from the accelerometer (18). The cabin interior device (14) has at least two operating states and is configured to switch between operating states in response to information received from the flight status detector (15).

## Description

The present invention is in the field of passenger aircraft, in particular in the field of electric devices arranged in a cabin of an aircraft. The present invention includes a system for flight status based control of a device arranged in a cabin of an aircraft, an aircraft comprising such a system, and a method for controlling a device arranged in a cabin of an aircraft based on a flight status of the aircraft.

Modern aircraft may be equipped with a plurality of electric devices, which are not essential for flying the aircraft. Modern passenger aircraft are in particular equipped with a plurality of electric devices, which are provided for enhancing the comfort of the passengers. Such devices may include electric devices installed within galleys of the aircraft for preparing hot meals and beverages and/or entertainment and information devices for entertaining and informing the passengers during the flight. Handling the electric devices and/or monitoring the correct handling of the electric devices by the passengers greatly contributes to the workload of the cabin crew.

Accordingly, it would be beneficial if such devices could operate with less oversight by the cabin crew.

Exemplary embodiments of the invention include a system for flight status based control of a passenger cabin interior device, i.e. of a device, which is arranged in a passenger cabin of an aircraft, wherein the system comprises: a flight status detector, comprising an air pressure sensor for detecting air pressure within the cabin and an accelerometer for detecting acceleration of the aircraft. The flight status detector is configured for determining a flight status of the aircraft from first sensor data, which is received from the air pressure sensor, and second sensor data, which is received from the accelerometer. The system further comprises the passenger cabin interior device, which is coupled to the flight status detector. The passenger cabin interior device has at least two operating states, and it is configured to switch between operating states in response to information received from the flight status detector.

Exemplary embodiments of the invention further include a method for controlling a passenger cabin interior device, i.e. a device, which is arranged in a passenger cabin of an aircraft, based on a flight status of the aircraft, wherein the method comprises: detecting an air pressure within the cabin and providing air pressure data, indicating the air pressure within the cabin; detecting acceleration of the aircraft and providing acceleration data, indicating the acceleration of the aircraft; determining a flight status of the aircraft from the air pressure data and the acceleration data; and switching a passenger cabin interior device between at least two different operating states in response to the determined flight status of the aircraft.

A system and a method according to exemplary embodiments of the invention allow for operating a passenger cabin interior device in an automated manner based on the current flight status of the aircraft, without coupling the passenger cabin interior device to the aircraft avionics.

Operating passenger cabin interior devices in an automated manner may reduce the workload of the cabin crew and/or enhance the comfort of the passengers. Since the passenger cabin interior devices do not need to be coupled to the aircraft avionics, there is no additional burden on the aircraft avionics system and the safety of the aircraft is not affected by the passenger cabin interior devices. As the operation of the passenger cabin interior devices is not essential for the safety of the aircraft itself and as the system for flight status based control of a device arranged in a cabin of an aircraft according to exemplary embodiments of the invention is functionally separated from the aircraft avionics, inexpensive components, in particular off-the-shelf components, may be employed in said system. The components of the system do in particular not need to fulfill the strict requirements and regulations for avionic components, which are relevant for a safe operation of the aircraft.

In an embodiment, the information received from the flight status detector may comprise an indication of the flight status of the aircraft. The information received from the flight status detector may, for example, indicate whether the aircraft is stationary in a parking position, taxiing on the ground, ascending / climbing, descending, or cruising at a substantially constant altitude.

In an embodiment, the flight status detector may be configured for providing operating state switching commands for switching the passenger cabin interior device. In such an embodiment, the flight status detector may comprise logic, which is configured for translating information received from the air pressure sensor and from the accelerometer into concrete operating state switching commands.

In an embodiment, the passenger cabin interior device may be configured for receiving flight status information from the flight status detector, and the passenger cabin interior device may comprise logic, which is configured for translating the flight status information received from the flight status detector into concrete commands for switching the passenger cabin interior device.

In an embodiment, the first sensor data, provided by the air pressure sensor, comprises momentary air pressure readings, indicating the momentary altitude of the aircraft.

In an embodiment, the first sensor data, provided by the air pressure sensor, comprises air pressure readings over time, allowing for evaluating the history of the air pressure readings over time. This may allow for deducing the development / course of the altitude of the aircraft over time.

In an embodiment, the flight status detector is configured for detecting at least two of the following flight statuses: aircraft standing still on the ground with at least one door open; aircraft standing still on the ground with closed doors; aircraft taxiing before take-off; aircraft climbing / ascending; aircraft in cruise, in particular at a substantially constant altitude; aircraft in descent; aircraft in turbulences; aircraft taxiing after landing; aircraft parking after having reached its parking position with closed doors; aircraft parking after having reached its parking position with at least one door open.

The flight status detector may in particular be configured for detecting any two, any three, any four, any five, any six, any seven, any eight, any nine, or all ten of these flight statuses.

It is also possible that the flight status detector is configured for making less granular detections. In particular, it is possible that the flight status detector is configured to detect that the aircraft is in one of two or more of the mentioned flight statuses. For example, the flight status detector may be configured to detect that the aircraft is in the status of aircraft taxiing before take-off or aircraft climbing. In another example, the flight status detector may be configured to detect that the aircraft is in the status of aircraft taxiing after landing or aircraft descending. Such less granular flight statuses may also be referred to as compound flight statuses of the aircraft.

In an embodiment, the flight status detector is configured to perform at least one of the following flight status detections:
The flight status detector may detect the flight status of aircraft on the ground, when the detected air pressure is above a first air pressure threshold, the detected air pressure is static, and the accelerometer indicates no vibrations. In particular, the flight status detector may detect the flight status of aircraft on the ground with at least one open door, when the detected air pressure is above the first air pressure threshold for an extended, predefined period of time, wherein the extended, predefined period of time is set longer than a common duration between the closing of the doors and taxiing. Further, the flight status detector may detect the flight status of aircraft on the ground with closed doors, when the detected air pressure is above the first air pressure threshold, the air pressure has increased, the air pressure is static again, and the accelerometer indicates no vibration. The increase in air pressure may correspond to a pressurization of the cabin of the aircraft before take-off.

The flight status detector may detect the flight status of aircraft taxiing before take-off, when the detected air pressure is above a second air pressure threshold, the detected air pressure is increasing or has increased due to pressurization of the cabin of the aircraft before take-off, and the accelerometer indicates vibrations caused by the taxing. The second air pressure threshold may be the same as first air pressure threshold, or it may differ from the first air pressure threshold.

The flight status detector may detect the flight status of aircraft climbing / ascending, when the detected air pressure is decreasing and the accelerometer indicates vibrations. Optionally, the flight status of aircraft climbing may be detected only if the air pressure is below a further air pressure threshold, for example below a further air pressure threshold corresponding to an altitude above sea level of 1800 m. Generally, the further air pressure threshold may be the same as the first air pressure threshold and/or the second air pressure threshold.

The flight status detector may detect the flight status of aircraft in cruise, when the detected air pressure is below a third air pressure threshold, the detected air pressure is substantially constant, and the accelerometer indicates vibrations. The air pressure being substantially constant may be defined as the air pressure having less variations / lower gradients than in the case of common ascent and descent rates.

The flight status detector may detect the flight status of aircraft in descent, when the detected air pressure is below a fourth air pressure threshold, the detected air pressure is increasing, and the accelerometer indicates vibrations.

The flight status detector may detect the flight status of aircraft in turbulences, when the detected air pressure is below a fifth air pressure threshold and the accelerometer indicates aircraft roll rates above a critical roll rate threshold

The flight status detector may detect the flight status of aircraft taxiing after landing, when the detected air pressure is above a sixth air pressure threshold, the detected air pressure has increased due to the approach to the airport, and the accelerometer indicates vibrations. Detecting the flight status of aircraft taxiing after landing may in particular include detecting an increase of the air pressure for more than a predetermined amount of time, for example for at least 10 minutes, due to the approach to the airport and/or detecting an air pressure decrease, following the air pressure increase, due to a de-pressurization of the cabin of the aircraft.

The flight status detector may detect the flight status of aircraft parking, when the detected air pressure has increased due to the approach to the airport, the detected air pressure is above a seventh air pressure threshold, the detected air pressure is static, and the accelerometer indicates no vibrations. The flight status detector may in particular detect the flight status of aircraft parking with at least one open door, when an air pressure decrease due to a de-pressurization of the cabin and/or due to an opening of at least one door of the aircraft, following the above mentioned air pressure increase due to the approach to the airport, has additionally been detected. The flight status detector may in particular detect the flight status of aircraft parking with closed doors, when said air pressure decrease has not been detected.

In an embodiment, any of the first, second, fourth, fifth, sixth, and seventh air pressure thresholds may correspond to an altitude above sea level of between 1700 m and 1900 m, in particular to an altitude above sea level of between 1750 m and 1850 m, more particularly to an altitude above sea level of about 1800 m. It is also possible that any of the first, second, fourth, fifth, sixth, and seventh air pressure thresholds corresponds to a larger altitude above sea level. It is possible that any of the first, second, fourth, fifth, sixth, and seventh air pressure thresholds corresponds to an altitude above sea level of more than 1700 m or more than 1800 m or more than 1900 m or more than 2000 m.

The first, second, fourth, fifth, sixth, and seventh air pressure thresholds may differ from each other.

It is also possible that the air pressure thresholds of any subset or all of the first, second, fourth, fifth, sixth, and seventh air pressure thresholds are identical.

In an embodiment, the third air pressure threshold may correspond to an altitude above sea level of between 2200 m and 2600 m, in particular to an altitude above sea level of between 2300 m and 2500 m, more particularly to an altitude above sea level of about 2400 m. It is also possible that the third air pressure threshold corresponds to a larger altitude above sea level. It is possible that the third air pressure threshold corresponds to an altitude above sea level of more than 2200 m or more than 2400 m or more than 3000 m.

Air pressure thresholds in the above listed ranges may allow the system for flight status based control to reliably identify and distinguish between the different flight statuses of the aircraft. In particular, the air pressure thresholds may be suitably chosen to account for high altitude airports, such as the Denver airport, and to account for different cruising altitudes of different aircraft types.

In an embodiment, the passenger cabin interior device, which may be switched between at least two operating states, is not critical for a safe operation of the aircraft.

In an embodiment, the passenger cabin interior device is not coupled to an avionics bus of the aircraft. In an embodiment, the passenger cabin interior device is not coupled to a central board computer of the aircraft. In this way, the passenger cabin interior device is not coupled to another entity within the aircraft, apart from the flight status detector, that would be capable to provide air cabin pressure data and/or aircraft acceleration data. Accordingly, without the flight status detector, the passenger cabin interior device would be a "dumb" device with respect to the flight status of the aircraft and would not be able to take the flight status into account / behave in accordance with the flight status in an automated manner. While air cabin pressure data and aircraft acceleration data are available in the avionics system / control system of the aircraft, it is only due to the flight status detector, as described herein, that the passenger cabin interior device has an increased functionality. Also, with the passenger cabin interior device not being coupled to the avionics bus / central board computer of the aircraft, the demands on the operational reliability of the system for flight status based control of the passenger cabin interior device, as described herein, can be kept low, and less expensive components may be used. Further, the avionics bus can be kept free of communication for the non-safety-critical passenger cabin interior device.

In an embodiment, the flight status detector is not coupled to an avionics bus of the aircraft and is not coupled to a central board computer of the aircraft. Since the flight status detector is separated from the avionics bus and the central board computer of the aircraft, the flight status detector cannot rely on air cabin pressure data and/or aircraft acceleration data that would be available in the avionics system / control system of the aircraft. Rather, the flight status detector relies its own pressure sensor and accelerometer, instead of relying on other similar entities that are embedded into the avionics system / control system of the aircraft. With the flight status detector being separate from the avionics system / control system, a malfunction of the flight status detector does not disturb the operation of the avionics bus and/or the operation of the central board computer of the aircraft. As a result, the safety of the aircraft is not compromised by the system for flight status based control of the passenger cabin interior device, as described herein.

The passenger cabin interior device may be operated independently of the avionics bus and the central board computer of the aircraft. Since the passenger cabin interior device is separated from the avionics bus, a malfunction of the passenger cabin interior device does not affect the operation of the avionics bus and/or the operation of the central board computer of the aircraft. As a result, the safety of the aircraft is not compromised by the system for flight status based control of the passenger cabin interior device, as described herein.

In an embodiment, the passenger cabin interior device does not receive air pressure data or acceleration data from outside of the system for flight status based control, as described herein, in operation. This may allow for a fully autonomous operation of the system for flight status based control, as described herein, and, in particular, of the passenger cabin interior device thereof.

In an embodiment, the flight status detector does not receive air pressure data or acceleration data from outside of the system for flight status based control, as described herein, in operation. This may allow for a fully autonomous operation of the system for flight status based control, as described herein, and, in particular, of the flight status detector thereof.

In an embodiment, the flight status detector is a stand-alone component, which is provided separately from the passenger cabin interior device. The flight status detector may be coupled to the passenger cabin interior device in any suitable manner that allows for the communication of information from the flight status detector to the passenger cabin interior device. Employing such a stand-alone flight status detector may allow to use existing off-the-shelf passenger cabin interior devices, which are available at low costs.

In an embodiment, the flight status detector is integrated into the passenger cabin interior device. This may allow for providing a compact device, which may operate autonomously based on the flight status of the aircraft and which may have low installation / wiring requirements.

In an embodiment, the system comprises a plurality of passenger cabin interior devices, which are coupled to the flight status detector. Each of the plurality of passenger cabin interior devices is configured to switch between operating states in response to information received from the flight status detector. Such an embodiment may allow for reducing the cost and/or complexity by employing a single flight status detector for switching a plurality of passenger cabin interior devices.

In an embodiment, the passenger cabin interior device is a galley insert, such as an an oven, a chiller, a beverage maker or a warmer. The galley insert may be configured to switch from an on state to an off state in response to the flight status of aircraft in descent being detected. This may help to provide a safe operating state of the galley, when the aircraft is preparing for landing, and/or may reduce the energy consumption of the galley and/or may help to reduce the workload of the cabin crew in preparation for landing. In addition / alternatively, the galley insert may be configured to switch from an off state to an on state in response to the flight status of aircraft climbing being detected or in response to the flight status of aircraft in cruise flight being detected. This may help in increasing the automation of preparing hot meals and beverages for the passengers, again helping to reduce the workload of the cabin crew.

In an embodiment, the passenger cabin interior device is an ancillary lavatory device, such as a boiler for providing heated water or a light for illuminating the interior of an aircraft lavatory. The ancillary lavatory device may be configured to switch from an on state to an off state in response to the flight status of aircraft in descent being detected. In addition / alternatively, the ancillary lavatory device may be configured to switch from an off state to an on state in response to the flight status of aircraft climbing being detected and/or in response to the flight status of aircraft in cruise flight being detected. This may help to reduce the energy consumption of the lavatory equipment and/or may help to reduce the workload of the cabin crew in preparing the lavatories.

In an embodiment, the passenger cabin interior device is a cabin utility device, such as a storage locking device, a monument locking device, or a wheelchair locking device. The storage locking device / monument locking device / wheelchair locking device may be configured to switch from an unlocked state to a locked state in response to the flight status of aircraft taxiing before take-off being detected and/or in response to the flight status of aircraft in descent being detected. This may help the flight safety of the aircraft and/or may help to reduce the workload of the cabin crew in preparing take-off and/or landing. The wheelchair locking device may be a wheelchair compartment locking device or a wheelchair restraint locking device.

In an embodiment, the passenger cabin interior device is a cabin utility device, such as a cabin signal light or a general cabin illumination light. The general cabin illumination light may be configured to switch into a maximum illumination operating state in response to the flight status of aircraft taxiing after landing being detected and/or in response to the flight status of aircraft parking being detected. This may help the passengers to collect their belongings and deboard the plane and/or may help the cleaning personal to clean the aircraft after the flight. The cabin signal light, which may for example be a fasten seat belt sign, may be configured to switch from an off state to an on state in response to the flight status of aircraft taxiing before take-off being detected and/or in response to the flight status of aircraft in descent being detected and/or in response to the flight status of aircraft in turbulences being detected.

In an embodiment, the passenger cabin interior device is a cabin utility device, such as a cabin crew cabin control device, a cabin crew verification device, a cabin crew rest room illumination light, or a cabin crew rest room power outlet. The cabin crew rest room illumination light / cabin crew rest room power outlet may be configured to switch from an on state to an off state in response to the flight status of aircraft in descent being detected. This may help to reduce the energy consumption, without compromising the functionality of the cabin crew rest room, as the cabin crew will be attending to the passengers / preparing the aircraft for landing during descent and will not be in the cabin crew rest room. The cabin crew cabin control device / cabin crew verification device may be configured to switch from an on state to an off state in response to the flight status of aircraft climbing being detected and/or in response to the flight status of aircraft in cruise being detected. In this way, the cabin crew interfaces may be switched off, when it is expected that the cabin crew is roaming around the cabin of the aircraft, which may help in preventing a tampering with these interfaces by unauthorized passengers.

In an embodiment, the passenger cabin interior device is a passenger environment device, which is associated with a passenger seat or with a group of passenger seats. The passenger environment device may in particular be a passenger environment conditioning device. The passenger environment device may be one of a passenger seat / passenger suite actuation device; a passenger seat lumbar support / ergonomic seating device; a seating restraint system; a passenger seat take off and landing position tracking device; a passenger reading light; an environment display; a passenger information system / passenger information display; a passenger signal light; a personal stowage illumination light; an overhead stowage illumination light; a stowage occupancy detection device; and a passenger service unit display and/or light.

The passenger seat / passenger suite actuation device / the passenger seat lumbar support / ergonomic seating device may be configured to switch from an off state to an on state in response to the flight status of aircraft climbing being detected. This may help in preventing the passengers to bring their seats / suites into positions that are not allowed for take-off, while enabling the comfort of inclineable / adjustable seating in a timely manner after take-off, without additional workload for the cabin crew. The seating restraint system may, conversely, be configured to switch from an on state to an off state in response to the flight status of aircraft climbing being detected.

The passenger seat take off and landing position tracking device may be configured to switch from an on state to an off state in response to the flight status of aircraft climbing being detected and/or to switch from an off state into an on state in response to the flight status of aircraft in descent being detected. In this way, the passenger seat take off and landing position tracking device may provide information as to the passenger seat being in the correct position for take-off and landing, while being off and saving energy for the cruise portion of the flight. The passenger seat take off and landing position tracking device may give meaningful alerts to the cabin crew during relevant portions of the flight, while preventing a burdening of the cabin crew with useless information during other portions of the flight. In addition, the cabin crew does not have the burden of switching and monitoring the on/ off state of the passenger seat take off and landing position tracking device.

The passenger reading light / the environment display / the passenger information system / passenger information display / the passenger signal light / the passenger service unit display and/or light may be configured to switch to a maximum illumination operating state in response to the flight status of aircraft taxiing before take-off being detected and/or in response to the flight status of aircraft parking being detected. This may help the passengers to collect their belongings and deboard the plane and/or may help the cleaning personal to clean the aircraft after the flight. It is also possible that the mentioned devices are configured to switch into suitable operating states in response to particular flight statuses, in order to provide a high level of comfort and/or intuitive handling to the passengers. For example, the passenger information system / passenger information display may be configured to switch into a basic information provision state in response to the flight status of aircraft taxiing before take-off being detected. In this way, the passengers may be provided with helpful information about the flight and may receive a convenient indication about the impeding onset of the trip.

The personal stowage illumination light / overhead stowage illumination light / stowage occupancy detection device may be configured to switch from an off state to an on state in response to the flight status of aircraft taxiing after landing being detected and/or in response to the flight status of aircraft parking being detected. This may help the passengers to collect their belongings from the personal stowage compartments / locations and/or from the the overhead stowage compartments and to quickly deboard the aircraft. It may also help to timely alert the cabin crew and/or cleaning personal with respect to forgotten items and to provide them back to the passengers. This gain in efficiency with respect to deboarding and airport operations may be achieved at low energy consumption, because the personal stowage illumination lights / overhead stowage illumination lights / stowage occupancy detection devices may be configured to be in an on state for the de-boarding phase of the flight only.

Exemplary embodiments of the invention further include an aircraft, such as an airplane or a helicopter, which is equipped with at least one system for flight status based control of a device arranged in a cabin of the aircraft according to an exemplary embodiment of the invention. The additional features, modifications and effects, as described above with respect to a system for flight status based control of a device arranged in a cabin of an aircraft and/or with respect to a method for controlling a device arranged in a cabin of an aircraft, apply to the aircraft in an analogous manner.

In the following, exemplary embodiments of the invention are described with respect to the accompanying drawings, wherein:
Figure 1A depicts a schematic, partially cut-open top view of an aircraft, comprising a system for flight status based control of a device according to an exemplary embodiment of the invention arranged within the aircraft.
Figure 1B depicts a schematic longitudinal cross-sectional view of a section of the passenger cabin of the aircraft depicted in Figure 1A.
Figure 2 depicts a block diagram of a system for flight status based control of a device according to an exemplary embodiment of the invention.
Figure 3 is a schematic diagram, illustrating the change of air pressure in the course of a flight of an aircraft.
Figures 4A to 4C schematically illustrate the sum of all accelerations acting on an aircraft in different flight conditions of the aircraft.

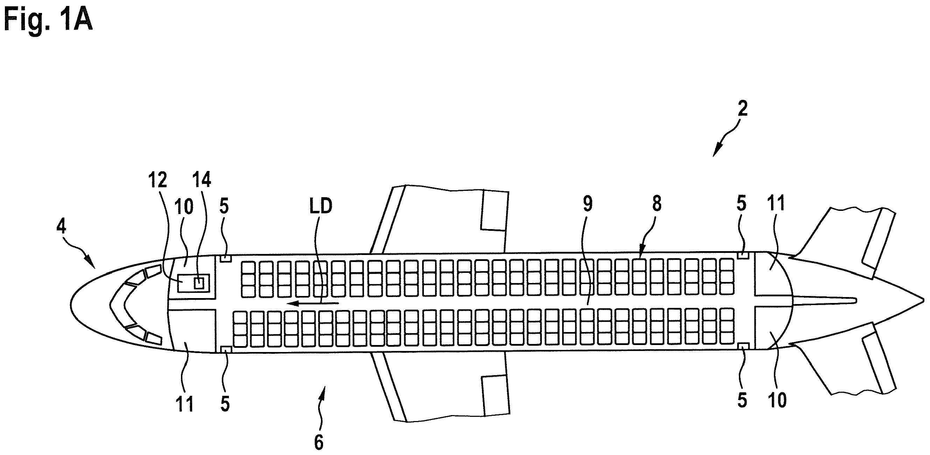

Figure 1A depicts a schematic, partially cut-open top view of an aircraft 2, comprising a system 12 for flight status based control of a device 14 within the aircraft 2 in accordance with an exemplary embodiment of the invention.

The aircraft 2 comprises a cockpit 4 and a passenger cabin 6.

The cabin 6 has four doors 5 and is equipped with a plurality of passenger seats 8. The passenger seats 8 are arranged next to each other, forming a plurality of passenger seat rows. Each passenger seat row comprises two groups of passenger seats 8, respectively including three passenger seats 8. The two groups of passenger seats 8 are separated from each other by an aisle 9, extending along a longitudinal direction LD of the aircraft 2.

The arrangement of the passenger seats 8, as depicted in Figure 1A, is only an example. In further embodiments, which are not explicitly shown in the figures, more or less than six passenger seats 8 may be arranged in each row of passenger seats 8 and/or more than one aisle 9 may be formed between multiple groups of passenger seats 8.

A plurality of galleys 10 and a plurality of lavatories 11 are provided within the passenger cabin 6.

In the exemplary embodiment depicted in Figure 1A, one galley 10 is provided at the front end and one galley 10 is provided at the rear end of the cabin 6. Similarly, one lavatory 11 is provided at the front end and one lavatory 11 is provided at the rear end of the cabin 6.

The numbers and the arrangements of the galleys 10 and lavatories 11, as depicted in Figure 1A, are only exemplary. An aircraft 2 according to an exemplary embodiment of the invention may comprise more or less than two galleys 10 and/ or more or less than two lavatories 11. Additional galleys and/or lavatories may, for example, be formed in a central portion of the cabin 6.

A system 12 for flight status based control of a device 14 is located in at least one of the galleys 10 and lavatories 11. It is also possible that a system 12 for flight status based control of a device 14 is located in the passenger cabin 6 outside the galleys 10 and lavatories 11. A system 12 for flight status based control of a device 14 may, for example, be located above or below a passenger seat 8 or a group of passenger seats 8 within the cabin 6.

Multiple systems 12 for flight status based control of respective devices may, for example, be concentrated at information hubs within the cabin 6 and may control various applications from there, such as passenger seats 8, lighting within the cabin 6, passenger service units (PSUs) arranged above the passenger seats, lavatories, and/or galleys. The systems 12 for flight status based control of cabin interior devices may enable and disable services to enhance the cabin experience or conserve energy and resources.

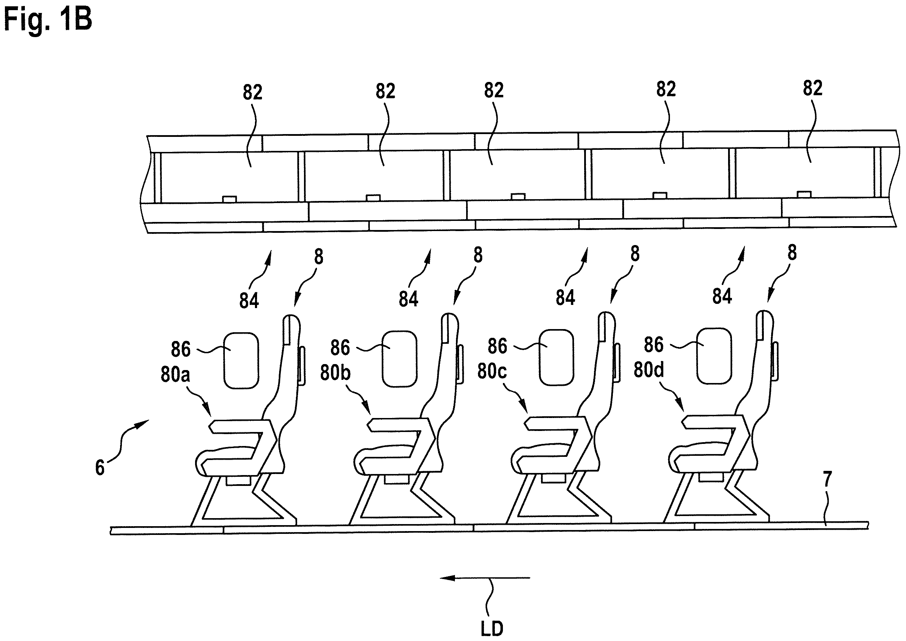

Figure 1B depicts a schematic longitudinal cross-sectional view of a section of the passenger cabin 6 of the aircraft 2 depicted in Figure 1A.

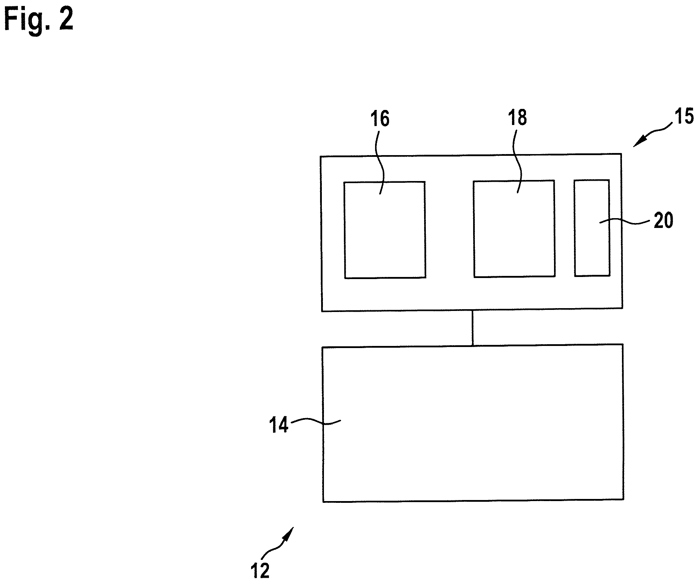

Four passenger seats 8 are visible in Figure 2. The passenger seats 8 are mounted to the floor 7 of the passenger cabin 6. Each of the depicted passenger seats 8 belongs to a different seat row 80a-80d. The seat rows 80a-80d are spaced apart from each other along the longitudinal direction LD of the passenger cabin 6. The longitudinal direction LD of the passenger cabin 6 basically corresponds to the forward flight direction of the aircraft 2.

For each of the seat rows 80a-80d, a window 86 is provided, which allows the passengers to view the outside of the aircraft 2. Further, a plurality of overhead baggage compartments 82, which provide storage space for the passengers' baggage, are provided above the passenger seats 8.

Each seat row 80a-80d may include a plurality of passenger seats 8, for example three passenger seats, which are arranged next to each other. The additional passenger seats 8 of each seat row 80a-80d, in particular a window seat and a middle seat, are not visible in Figure 1B, as they are arranged behind and therefore hidden by the depicted passenger seats 8, which are aisle seats.

An aircraft overhead passenger service unit ("PSU") 84 is provided above each of the seat rows 80a-80d, respectively.

Each aircraft overhead passenger service unit 84 may comprise reading lights, electrical switches for switching the adjacent reading lights and/or for triggering a signal for calling cabin service personnel; and gaspers for supplying fresh air to the passengers.

Each aircraft overhead passenger service unit 84 may further comprise an oxygen mask storage compartment, housing oxygen masks, which are coupled to an oxygen supply for supplying oxygen to the passengers in an emergency situation, resulting in a loss of pressure within the passenger cabin.

Each aircraft overhead passenger service unit 84 also further comprises at least one loudspeaker, which may be used for delivering acoustic announcements to the passengers, and switchable visual signs for selectively displaying signaling information to the passengers.

Figure 2 depicts a block diagram of a system 12 for flight status based control of a device 14 according to an exemplary embodiment of the invention.

The system 12 includes a flight status detector 15 and a passenger cabin interior device 14. The flight status detector 15 comprises an air pressure sensor 16 for detecting the air pressure p_{cab} within the passenger cabin 6 and an accelerometer 18 for detecting an acceleration of the aircraft 2. Optionally, the flight status detector 15 may further comprise a timer 20. The function of the timer 20 will be discussed further below.

The flight status detector 15 is configured for determining a flight status of the aircraft 2 from first sensor data, provided by the air pressure sensor 16, and second sensor data, provided by the accelerometer 18.

The air pressure sensor 16 and the accelerometer 18 may be off-the-shelf sensors, which are commercially available at low costs. The air pressure sensor 16 and the accelerometer 18 may in particular be surface mounted device (SMD) sensors.

The first sensor data may comprise current air pressure readings. The first sensor data may also comprise a plurality of air pressure readings, in particular a history of air pressure readings, providing information about the progress of the air pressure p_{cab} within the cabin 6 over time.

The system 12 includes further a passenger cabin interior device 14, which is coupled to the flight status detector 15. The passenger cabin interior device 14 has at least two operating states and it is switchable between the at least two different operating states in response to information received from the flight status detector 15.

The passenger cabin interior device 14 may, for example, be a galley insert, such as an an oven, a chiller, a beverage maker or a warmer. The galley insert may be located in one of the plurality of galleys 10, examples of which are depicted in Figure 1A. The galley insert may be configured to switch from an on state to an off state in response to the flight status of aircraft in descent being detected. This may help to provide a safe operating state of the galley, when the aircraft is preparing for landing, and/or may reduce the energy consumption of the galley and/or may help to reduce the workload of the cabin crew in preparation for landing. In addition / alternatively, the galley insert may be configured to switch from an off state to an on state in response to the flight status of aircraft climbing being detected or in response to the flight status of aircraft in cruise flight being detected. This may help in increasing the automation of preparing hot meals and beverages for the passengers, again helping to reduce the workload of the cabin crew.

The passenger cabin interior device 14 may, in another example, be an ancillary lavatory device, such as a boiler for providing heated water or a light for illuminating the interior of an aircraft lavatory. The ancillary lavatory device may be located in one of the plurality of lavatories 11, examples of which are depicted in Figure 1A. The ancillary lavatory device may be configured to switch from an on state to an off state in response to the flight status of aircraft in descent being detected. In addition / alternatively, the ancillary lavatory device may be configured to switch from an off state to an on state in response to the flight status of aircraft climbing being detected and/or in response to the flight status of aircraft in cruise flight being detected. This may help to reduce the energy consumption of the lavatory equipment and/or may help to reduce the workload of the cabin crew in preparing the lavatories.

The passenger cabin interior device 14 may, in another example, be a cabin utility device, such as a storage locking device, a monument locking device, or a wheelchair locking device. Such a cabin utility device may be located in any suitable location within the passenger cabin 6, where a storage door is to be locked and/or where a monument is to be restrained from moving / panning and/or where a wheelchair is to be locked away / restrained in a safe in-flight position. The storage locking device / monument locking device / wheelchair locking device may be configured to switch from an unlocked state to a locked state in response to the flight status of aircraft taxiing before take-off being detected and/or in response to the flight status of aircraft in descent being detected. This may help the flight safety of the aircraft and/or may help to reduce the workload of the cabin crew in preparing take-off and/or landing. The wheelchair locking device may be a wheelchair compartment locking device or a wheelchair restraint locking device.

The passenger cabin interior device 14 may, in another example, be a cabin utility device, such as a cabin signal light or a general cabin illumination light. Such a cabin utility device may be located in any suitable location within the passenger cabin 6, where the illuminated signal has good visibility to the passengers and where the general cabin illumination light is well-positioned for a bright and highly uniform light output into the passenger cabin 6. The general cabin illumination light may be configured to switch into a maximum illumination operating state in response to the flight status of aircraft taxiing after landing being detected and/or in response to the flight status of aircraft parking being detected. This may help the passengers to collect their belongings and deboard the plane and/or may help the cleaning personal to clean the aircraft after the flight. The cabin signal light, which may for example be a fasten seat belt sign, may be configured to switch from an off state to an on state in response to the flight status of aircraft taxiing before take-off being detected and/or in response to the flight status of aircraft in descent being detected and/or in response to the flight status of aircraft in turbulences being detected.

The passenger cabin interior device 14 may, in another example, be a cabin utility device, such as a cabin crew cabin control device, a cabin crew verification device, a cabin crew rest room illumination light, or a cabin crew rest room power outlet. The cabin utility device may be located in a cabin crew rest room or in another conveniently accessible location for the cabin crew, such as close to a door 5 of the passenger cabin 6, close to a cabin crew seat, or close to a galley 10. The cabin crew rest room illumination light / cabin crew rest room power outlet may be configured to switch from an on state to an off state in response to the flight status of aircraft in descent being detected. This may help to reduce the energy consumption, without compromising the functionality of the cabin crew rest room, as the cabin crew will be attending to the passengers / preparing the aircraft for landing during descent and will not be in the cabin crew rest room. The cabin crew cabin control device / cabin crew verification device may be configured to switch from an on state to an off state in response to the flight status of aircraft climbing being detected and/or in response to the flight status of aircraft in cruise being detected. In this way, the cabin crew interfaces may be switched off, when it is expected that the cabin crew is roaming around the cabin of the aircraft, which may help in preventing a tampering with these interfaces by unauthorized passengers.

The passenger cabin interior device 14 may, in another example, be a passenger environment device, which is associated with a passenger seat 8 or with a group of passenger seats 8. In particular, the passenger environment device may be located in the vicinity of and/or coupled with a passenger seat 8 or a group of passenger seats 8. Further in particular, the passenger environment device may be located in such close proximity to and/or in such a coupled relationship with the passenger seat 8 / the group of passenger seats 8 that the passenger environment device can have an impact on the passenger environment / passenger comfort, when the passenger(s) is/are seated in the passenger seat 8 / group of passenger seats 8. The passenger environment device may in particular be a passenger environment conditioning device. The passenger environment device may be one of a passenger seat / passenger suite actuation device; a passenger seat lumbar support / ergonomic seating device; a seating restraint system; a passenger seat take off and landing position tracking device; a passenger reading light; an environment display; a passenger information system / passenger information display; a passenger signal light; a personal stowage illumination light; an overhead stowage illumination light; a stowage occupancy detection device; and a passenger service unit display and/or light.

The passenger seat / passenger suite actuation device / the passenger seat lumbar support / ergonomic seating device may be configured to switch from an off state to an on state in response to the flight status of aircraft climbing being detected. This may help in preventing the passengers to bring their seats / suites into positions that are not allowed for take-off, while enabling the comfort of inclineable / adjustable seating in a timely manner after take-off, without additional workload for the cabin crew. The seating restraint system may, conversely, be configured to switch from an on state to an off state in response to the flight status of aircraft climbing being detected.

The passenger seat take off and landing position tracking device may be configured to switch from an on state to an off state in response to the flight status of aircraft climbing being detected and/or to switch from an off state into an on state in response to the flight status of aircraft in descent being detected. In this way, the passenger seat take off and landing position tracking device may provide information as to the passenger seat being in the correct position for take-off and landing, while being off and saving energy for the cruise portion of the flight. The passenger seat take off and landing position tracking device may give meaningful alerts to the cabin crew during relevant portions of the flight, while preventing a burdening of the cabin crew with useless information during other portions of the flight. In addition, the cabin crew does not have the burden of switching and monitoring the on/ off state of the passenger seat take off and landing position tracking device.

The passenger reading light / the environment display / the passenger information system / passenger information display / the passenger signal light / the passenger service unit display and/or light may be configured to switch to a maximum illumination operating state in response to the flight status of aircraft taxiing before take-off being detected and/or in response to the flight status of aircraft parking being detected. This may help the passengers to collect their belongings and deboard the plane and/or may help the cleaning personal to clean the aircraft after the flight. It is also possible that the mentioned devices are configured to switch into suitable operating states in response to particular flight statuses, in order to provide a high level of comfort and/or intuitive handling to the passengers. For example, the passenger information system / passenger information display may be configured to switch into a basic information provision state in response to the flight status of aircraft taxiing before take-off being detected. In this way, the passengers may be provided with helpful information about the flight and may receive a convenient indication about the impeding onset of the trip.

The personal stowage illumination light / overhead stowage illumination light / stowage occupancy detection device may be configured to switch from an off state to an on state in response to the flight status of aircraft taxiing after landing being detected and/or in response to the flight status of aircraft parking being detected. This may help the passengers to collect their belongings from the personal stowage compartments / locations and/or from the the overhead stowage compartments and to quickly deboard the aircraft. It may also help to timely alert the cabin crew and/or cleaning personal with respect to forgotten items and to provide them back to the passengers. This gain in efficiency with respect to deboarding and airport operations may be achieved at low energy consumption, because the personal stowage illumination lights / overhead stowage illumination lights / stowage occupancy detection devices may be configured to be in an on state for the de-boarding phase of the flight only. The personal stowage illumination light / overhead stowage illumination light / stowage occupancy detection device may for example be located in a respective one of the baggage compartments 82, examples of which are depicted in Figure 1B.

It is understood that the passenger cabin interior devices, as described above, and their switching in response to particular aircraft statuses are exemplary only and that other passenger cabin interior devices may benefit from the principles discussed herein and that the passenger cabin interior devices may be configured for other operating state switches. It is understood that the described and other passenger cabin interior devices and operating state switches may help in reducing the workload of the cabin crew and/or in conserving energy and/or in increasing passenger comfort.

The information received from the flight status detector 15 may be an indication of the current flight status of the aircraft 2. The information received from the flight status detector 15 may also be an operating state switching command for switching the passenger cabin interior device 14.

Logic for translating the received information about the current flight status of the aircraft 2 into a concrete command for a specific device 14 may be part of the flight status detector 15 or part of the passenger cabin interior device 14, respectively. There may also be an intermediate entity that may comprise said logic and/or that may filter / route the information on its way from the device 14 to the flight status detector 15.

With such a system architecture, the flight status detector 15 may be configured for switching the passenger cabin interior device 14 between at least two different operating states in response to information received from the air pressure sensor 16 and the accelerometer 18. The flight status detector 15 may, in particular, supply control commands to the the passenger cabin interior device 14 for switching the passenger cabin interior device 14 between at least two different operating states. The flight status detector 15 may also be configured for selectively activating and deactivating the supply of electric power to the passenger cabin interior device 14.

In another embodiment, the flight status detector 15 may be configured for forwarding the flight status of the aircraft 2 and/or information received from the air pressure sensor 16 and the accelerometer 18 to the passenger cabin interior device 14, and the passenger cabin interior device 14 itself may be configured for switching between at least two different operating states based on the information received from the flight status detector 15.

The switching between at least two different operating states may in particular include activating and deactivating the passenger cabin interior device 14.

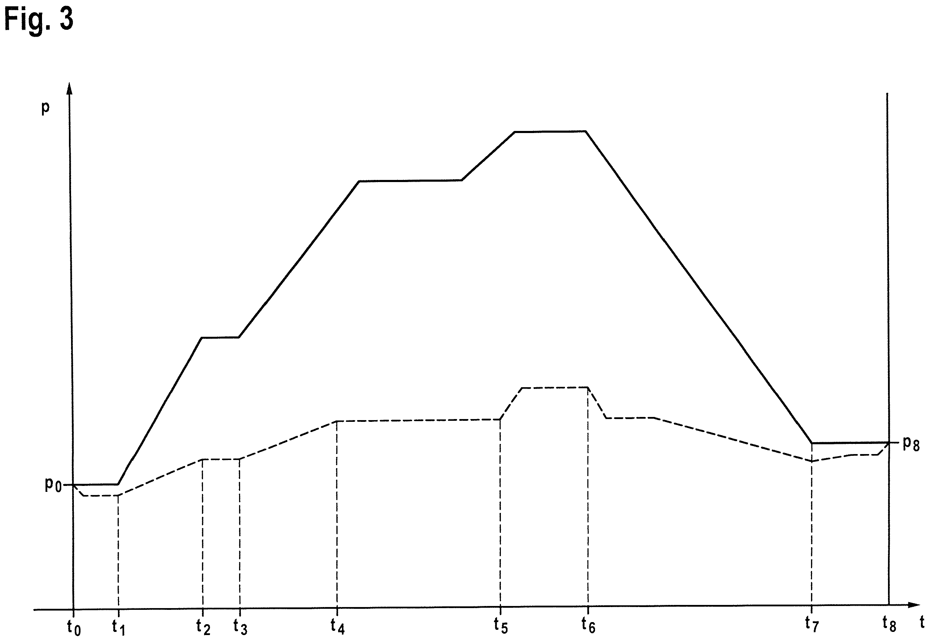

Figure 3 is a schematic diagram, illustrating the change of the air pressure over time t in the course of a flight of an aircraft 2. In Figure 3, the ambient air pressure p_{amb}, measured outside the cabin 6, i.e. measured on the outside of the aircraft 2, is plotted as a solid line, and the air pressure p_{cab}, measured within the cabin 6, is plotted as a dashed line.

In Figure 3, the air pressures p_{amb}, p_{cab} are plotted as the equivalent altitudes in a standard atmosphere; i.e. as the altitudes above sea level in the standard atmosphere, which correspond to the respective air pressures. In consequence, in the diagram depicted in Figure 3, high air pressures correspond to low values / low pressure equivalents, plotted on the vertical axis of the diagram, and low air pressures correspond to large values / large pressure equivalents, plotted on the vertical axis of the diagram.

At t₀, the aircraft 2 is stationary on the ground, with at least one door 5 being open. In consequence, the air pressures p_{amb}, p_{cab} inside and outside the aircraft 2 are identical (p_{amb} = p_{cab} = p₀).

After the doors of the aircraft 2 have been closed (t > t₀), the cabin 6 and the cockpit 4 are pressurized by the aircraft cabin pressurizing system.

As a result, the air pressure p_{cab} within the cabin 6 raises above the ambient air pressure p_{amb}. In the diagram shown in Figure 3, in which the air pressures p_{amb}, p_{cab} are plotted as their equivalents in altitude above sea level in the standard atmosphere, the dashed line indicating the air pressure p_{cab} within the cabin 6, which in the following will also be referred to as cabin air pressure p_{cab}, drops below the solid line indicating the ambient air pressure p_{amb}.

The ambient air pressure p_{amb} and the cabin air pressure p_{cab} remain constant while the aircraft 2 is taxing to its starting position.

At t₁, the aircraft 2 starts to climb after take-off. During the time period t₁ < t < t₂ following the take-off, the ambient air pressure p_{amb} and the cabin air pressure p_{cab} fall in correspondence with the increasing altitude of the aircraft 2.

During the following time period t₂ < t < t₃, the aircraft 2 stays at a constant altitude, for example waiting for admission to a higher air space. During said period of time, the ambient air pressure p_{amb} and the cabin air pressure p_{cab} remain constant.

In the following time period t₃ < t < t₄, the aircraft 2 rises further to a higher altitude, resulting in a further decrease of the ambient air pressure p_{amb} as well as of the cabin air pressure p_{cab}.

At t₄, the aircraft 2 has reached it cruising altitude and starts to cruise at said constant altitude. In consequence, the ambient air pressure p_{amb} and the cabin air pressure p_{cab} remain constant in the following period of time t₄ < t < t₅.

After t₅, the aircraft 2 climbs to a different cruising altitude, for example in order to avoid bad weather or other air traffic. In consequence, the ambient air pressure p_{amb} and the cabin air pressure p_{cab} drop even further and then remain constant at their respective reduced values for the following period of time t₅ < t < t₆.

At t₆, the aircraft 2 starts its descent in preparation for landing. The descent of the aircraft 2 results in a continuous increase of the ambient air pressure p_{amb} and the cabin air pressure p_{cab} until the aircraft 2 has landed at its destination at t₇.

It is noted that due to different weather and/or different altitudes between the locations of the take-off and the landing of the aircraft 2, the ambient air pressure p_{amb} = p₈ at the landing site may differ from the ambient air pressure p_{amb} = p₀ at the take-off site.

After the aircraft 2 has landed at t₇, the cabin air pressure p_{cab} remains slightly above the ambient air pressure p_{amb}, until the doors of the aircraft 2 are opened at t₈. During said time frame, a de-pressurization via the the aircraft cabin pressurizing system may take place. In this way, the cabin air pressure p_{cab} may approach the ambient air pressure p_{amb}, before the doors are opened. The opening of the doors then results in a complete air pressure equalization between the exterior and the interior of the aircraft 2, which causes the cabin air pressure p_{cab} to become equal to the ambient air pressure p_{amb} (p_{cab} = p_{amb} = p₈).

Due to buffering and/or hysteresis effects of the aircraft cabin pressurizing system, there may be delays between the changes of the ambient air pressure p_{amb} and the cabin air pressure p_{cab}. Examples of such delays are visible in the diagram depicted in Figure 3 at t₄, t₅ and t₆.

Controlling a passenger cabin interior device 14 by a system 12 for flight status based control according to exemplary embodiments of the invention is based on the cabin air pressure p_{cab}, as measured by the air pressure sensor 16 within the cabin 6, but does not rely on the external ambient air pressure p_{amb} outside the aircraft 2. As can be seen from Figure 3, the cabin air pressure p_{cab} is a good proxy for the altitude of the aircraft 2. Accordingly, observing the cabin air pressure p_{cab} over tine provides for a good indication of the flight status of the aircraft 2. The delays of the changes of the cabin air pressure p_{cab} with respect to the changes of the ambient air pressure p_{amb} are inferior to the large scale development of the cabin air pressure p_{cab} and do not compromise the control of the passenger cabin interior device 14 by a system 12 according to an exemplary embodiment of the invention.

A system 12 for flight status based control may be configured to activate the passenger cabin interior device 14, when the flight status detector 15 detects that the doors 5 of the aircraft 2 have been closed or that the aircraft 2 has reached a cruising altitude.

Similarly, a system 12 for flight status based control may be configured to switch off the passenger cabin interior device 14, when the flight status detector 15 detects that the aircraft 2 has started its descent in preparation for landing or when the doors 5 of the aircraft 2 have been opened.

In case the data provided by the air pressure sensor 16 indicates that the aircraft 2 has descended below 1800 m above sea level, the system 12 for flight status based control may trigger procedures for preparing the landing and de-boarding the aircraft 2.

Such procedures may include dimming the cabin light and/or passenger reading lights. Such procedures may further include moving motor driven seats into their upright positions and/or preventing motor driven seats to leave their upright positions.

These procedures may also include automatically requesting the passengers to fold-up their tables and/or to move the seats into upright positions. The requests may include displaying corresponding messages at the passenger seats 8 and/or making acoustic announcements to the passengers.

The system 2 may further be configured to indicate to the passengers that they are allowed to fold-down their tables and/or to move the passenger seats 8 out of their upright positions and/or to activate seat lumbar and ergonomic devices, when the data provided by the flight status detector 15 indicates that the aircraft 2 has reached its cruising altitude and/or when the flight status detector 15 indicates that the aircraft 2 is climbing and it is considered safe to make the mentioned changes to the passenger environment.

An automated control of passenger cabin interior devices 14 by a system for flight status based control according to exemplary embodiments of the invention may relieve the members of the cabin crew from the task of activating and deactivating the respective passenger cabin interior devices 14 in due time before, during, and/ or after the flight of the aircraft 2. As a result, the workload of the cabin crew may be reduced.

The accelerometer 18 of the flight status detector 15 may help to detect whether the aircraft 2 is moving, in particular taxiing on the ground and/or flying, or whether it has come to a complete stop. This may increase the confidence of the detection and distinction between different flight statuses of the aircraft 2.

The accelerometer 18 may be configured for detecting vibrations of the aircraft 2. Detecting vibrations may indicate that the aircraft 2 is in motion and may help to distinguish between different flight statuses where the cabin air pressure p_{cab} is not sufficiently decisive, e.g. when distinguishing between aircraft taxiing and aircraft on ground parking. Also, detecting vibrations may be a good way of corroborating that the aircraft is flying, when the cabin air pressure p_{cab} changes and/or indicated a cruising altitude of the aircraft. Also, potential malfunctions of the air pressure sensor 16 may be detected with the help of the accelerometer. Further, detecting vibrations that are commonly associated with a regular flight regime may provide for a good way of distinguishing a safe flight status from an aircraft being in turbulences.

The accelerometer 18 may further be configured for detecting significant rolling movements of the aircraft 2. A significant rolling movement of the aircraft 2, which is asynchronous with a lateral axis of acceleration, is a significant sign of turbulences.

In contrast, a rolling movement that is in line with the acceleration of the aircraft 2 indicates that the aircraft 2 is flying in a steep banked curve, since the acceleration is always pointed to the ground.

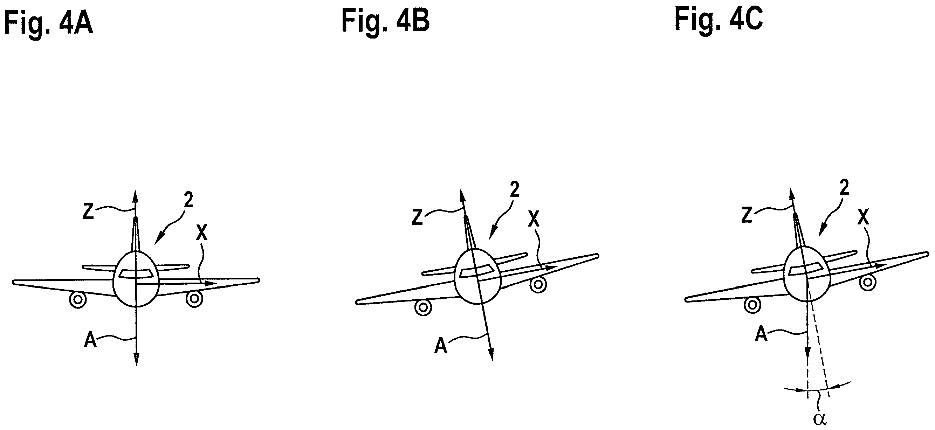

This is schematically illustrated in Figures 4A to 4C:
Figure 4A depicts a schematic front view of an aircraft 2, which is in straight flight. In this flight condition, the sum A of all accelerations extends vertically downward, i.e. in the same direction as the vertical axis z of the aircraft 2.
Figure 4B depicts the aircraft 2 in a normal banked turn. In this flight condition, the vertical axis z of the aircraft 2 is inclined with respect to the horizontal horizon, but the sum A of all accelerations still extends in the same direction as the vertical axis z of the aircraft 2, which is also inclined with respect to the horizon.
Figure 4C depicts the aircraft 2 in a situation in which it is exposed to turbulences. The aircraft 2 depicted in Figure 4C is also banked, similar to the aircraft 2 depicted in Figure 4C, but the sum A of all accelerations is inclined at an angle α with respect to the the vertical axis z of the aircraft 2.

Thus, when, based on the data provided by the air pressure sensor of the flight status detector, the aircraft 2 is determined to be in flight, and there is an offset between the vertical axis z of the aircraft 2 and the sum A of the accelerations detected by the accelerometer 18, there is a high probability that the aircraft 2 is experiencing turbulences. The rate of roll off lateral acceleration may be an indicator for the severeness of said turbulences.

Detecting turbulences based on data provided by the flight status detector 15 may allow for automatically activating and/or deactivating a passenger cabin interior device 14, in case significant turbulences are detected. This may, for example, include automatically deactivating passenger cabin interior devices 14, such as galley inserts, which should not be operated when the aircraft 2 is exposed to significant turbulences, for enhancing the safety of the aircraft 2.

This may also include automatically activating additional safety devices and/or safety indicators, such as fasten seat belt signs, which may help in enhancing the safety of the aircraft 2 and its passengers, when the aircraft 2 is exposed to turbulences.

As mentioned before, the flight status detector 15 may comprise an optional timer 20, which may allow for adding a hysteresis to the measurements. Adding a hysteresis to the measurements may allow for preventing the device 14 from being accidentally activated or deactivated due to accidental fluctuations of the cabin air pressure p_{cab} detected by the pressure sensor 16 and/or of the acceleration of the aircraft 2 detected by the accelerometer 18.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. System (12) for flight status based control of a device (14) arranged in a cabin (6) of an aircraft (2), the system (12) comprising:
a flight status detector (15), comprising an air pressure sensor (16) for detecting air pressure (p_{cab}) within the cabin (6) and an accelerometer (18) for detecting acceleration of the aircraft (2), wherein the flight status detector (15) is configured to determine a flight status of the aircraft (2) from first sensor data, received from the air pressure sensor (16), and second sensor data, received from the accelerometer (18), and
a cabin interior device (14), coupled to the flight status detector (15), wherein the cabin interior device (14) has at least two operating states and wherein the cabin interior device (14) is configured to switch between operating states in response to information received from the flight status detector (15).

2. System (12) according to claim 1, wherein the information received from the flight status detector (15) comprises an indication of the flight status of the aircraft (2) and/or an operating state switching command.

3. System (12) according to claim 1 or 2, wherein the first sensor data comprises momentary air pressure readings and/or air pressure readings over time.

4. System (12) according to any of the preceding claims, wherein the flight status detector (15) is configured to detect at least two of the following flight statuses:
- aircraft on ground with at least one open door;
- aircraft on ground with closed doors;
- aircraft taxiing before take-off;
- aircraft climbing;
- aircraft in cruise;
- aircraft in descent;
- aircraft in turbulences;
- aircraft taxiing after landing;
- aircraft parking after having reached its parking position with closed doors; and
- aircraft parking after having reached its parking position with at least one open door.

5. System (12) according to claim 4, wherein the flight status detector (15) is configured to perform at least one of the following flight status detections:
- detect the flight status of aircraft on ground, when the air pressure (p_{cab}) is above a first air pressure threshold, the air pressure is static, and the accelerometer (18) indicates no vibration;
- detect the flight status of aircraft taxiing before take-off, when the air pressure (p_{cab}) is above a second air pressure threshold, the air pressure (p_{cab}) is increasing or has increased, and the accelerometer (18) indicates vibrations;
- detect the flight status of aircraft climbing, when the air pressure (p_{cab}) is decreasing and the accelerometer (18) indicates vibrations;
- detect the flight status of aircraft in cruise, when the air pressure (p_{cab}) is below a third air pressure threshold, the air pressure (p_{cab}) is substantially constant, and the accelerometer (18) indicates vibrations;
- detect the flight status of aircraft in descent, when the air pressure (p_{cab}) is below a fourth air pressure threshold, the air pressure (p_{cab}) is increasing, and the accelerometer (18) indicates vibrations;
- detect the flight status of aircraft in turbulences, when the air pressure (p_{cab}) is below a fifth air pressure threshold and the accelerometer (18) indicates aircraft (2) roll rates above a critical roll rate threshold;
- - detect the flight status of aircraft taxiing after landing, when the air pressure (p_{cab}) is above a sixth air pressure threshold, the air pressure (p_{cab}) has increased, followed by a decrease of the air pressure (p_{cab}), and the accelerometer (18) indicates vibrations.

6. System (12) according to claim 5,
wherein each of the first, second, fourth, fifth, and sixth air pressure thresholds corresponds to an altitude above sea level of between 1700 m and 1900 m, wherein each of the first, second, fourth, fifth, and sixth air pressure thresholds in particular corresponds to an altitude above sea level of between 1750 m and 1850 m, more particularly to an altitude above sea level of about 1800 m;
and/or
wherein the third air pressure threshold corresponds to an altitude above sea level of between 2200 m and 2600 m above, wherein the third air pressure threshold in particular corresponds to an altitude above sea level of between 2300 m and 2500 m, more particularly to an altitude above sea level of about 2400 m.

7. System (12) according to any of the preceding claims, wherein the cabin interior device (14) is non-safety-critical.

8. System (12) according to any of the preceding claims,
wherein the flight status detector (15) is a stand-alone component; or
wherein the flight status detector (15) is integrated into the cabin interior device (14).

9. System (12) according to any of the preceding claims,
wherein the flight status detector (15) is not coupled to an avionics bus of the aircraft (2) and is not coupled to a central board computer of the aircraft (2),
and/or
wherein the cabin interior device (14) is not coupled to an avionics bus of the aircraft (2) and is not coupled to a central board computer of the aircraft (2).

10. System (12) according to any of the preceding claims,
wherein the flight status detector (15) does not receive air pressure data or acceleration data from outside of the system (12) in operation,
and/or
wherein the cabin interior device (14) does not receive air pressure data or acceleration data from outside of the system (12) in operation.

11. System (12) according to any of the preceding claims, comprising a plurality of cabin interior devices (14) coupled to the flight status detector (15), wherein each of the plurality of cabin interior devices (14) is coupled to the flight status detector (15) and is configured to switch between operating states in response to information received from the flight status detector (15).

12. System (12) according to any of the preceding claims,
wherein the cabin interior device (14) is a galley insert, such as an oven, a chiller, a beverage maker or a warmer, wherein the galley insert is in particular configured to switch from an on state to an off state in response to the flight status of aircraft in descent being detected;
or
wherein the cabin interior device (14) is an ancillary lavatory device, such as a boiler for heating water or a lavatory light;
or
wherein the cabin interior device (14) is a cabin utility device, such as a storage locking device, a monument locking device, a wheelchair locking device, a cabin signal light, a general cabin illumination light, a cabin crew cabin control device, a cabin crew verification device, a cabin crew rest room illumination light, or a cabin crew rest room power outlet.

13. System (12) according to any of the preceding claims, wherein the cabin interior device (14) is a passenger environment device, associated with a passenger seat (8) or with a group of passenger seats (8); wherein the cabin interior device (14) is in particular one of a passenger seat / passenger suite actuation device; a passenger seat lumbar support / ergonomic seating device; a seating restraint system; a passenger seat take off and landing position tracking device; a passenger reading light; an environment display; a passenger information system / passenger information display; a passenger signal light; a personal stowage illumination light; an overhead stowage illumination light; a stowage occupancy detection device; and a passenger service unit display and/or light.

14. Aircraft (2), such as an airplane or a helicopter, comprising a system (12) according to any of the preceding claims.

15. Method for controlling a device (14), which is arranged in a cabin (6) of an aircraft (2), based on a flight status of the aircraft (2), the method comprising:
detecting an air pressure (p_{cab}) within the cabin (6) and providing air pressure data, indicating the air pressure (p_{cab}) within the cabin (6);
detecting acceleration of the aircraft (2) and providing acceleration data, indicating the acceleration of the aircraft (2);
determining a flight status of the aircraft (2) from the air pressure data and the acceleration data; and
switching a cabin interior device (14) between at least two different operating states in response to the determined flight status of the aircraft (2).
